# EUROPEAN PATENT SPECIFICATION

(11) **EP 2 665 300 B1**
(45) Date of publication and mention of the grant of the patent: **26.10.2016**
(21) Application number: 11862010.3
(22) Date of filing: 21.06.2011
(51) Int. Cl.: H04W 8/18, H04W 88/02, H04W 12/08

(54) **MOBILE TERMINAL AND NETWORK LOCKING METHOD THEREFOR**
MOBILES ENDGERÄT UND NETZWERKBLOCKIERUNGSVERFAHREN DAFÜR
TERMINAL MOBILE ET PROCÉDÉ DE VERROUILLAGE DE RÉSEAU CORRESPONDANT

(30) Priority: 30.03.2011 CN 201110079065
(43) Date of publication of application: 20.11.2013
(73) Proprietor: ZTE Corporation, Shenzhen, Guangdong 518057 (CN)
(72) Inventor: YAO, Xiaofeng, Shenzhen Guangdong 518057 (CN); LIN, Hua, Shenzhen Guangdong 518057 (CN)
(74) Representative: Modiano, Micaela Nadia
(86) International application number: PCT/CN2011/076012
(87) International publication number: WO 2012/129851

(56) References cited:
- WO-A1-2010/148778
- CN-A- 101 018 125
- US-A1- 2007 094 507
- US-A1- 2008 003 980

## Description

### Technical Field

The present document relates to mobile communication technology, and more particularly, to a mobile terminal and a network locking method thereof.

### Background of the Related Art

As the currently most commonly used mobile terminals, the development and popularization of mobile phones more and more affects the information communication ways, and the phones have become an integral part of people's daily life and work. Currently, most mobile phone manufacturers cooperate with the operators and use the customized way to obtain profits, however, the operator, in order to protect his legitimate rights and interests, generally requires to lock the networks for the customized mobile phone, that is, lock certain specific networks, so that the user can only use the operator's services to protect his own benefits. With the development of internationalized economy, services provided by many large operators can cover multiple networks. If a operator needs to customize a batch of mobile phones that is sold out to different network coverage regions, the mobile phone manufacturer, before delivering the mobile phones, must perform different network locking for mobile phones delivered to different areas, which has very low efficiency, moreover, the network-locked mobile phones can only be used in specific networks, and if the operator needs to internally schedule across the networks, the mobile phones must be returned to the manufacturer to re-lock their networks, whose cost is too high. Patent Applications US 2007/094507, WO 2010/148778 and CN 101984575 disclose different network locking methods.

### Summary of the Invention

In view of this, the main purpose of the present document is to provide a mobile terminal and a network locking method thereof to achieve flexible network locking of said mobile terminal.

To achieve the above-mentioned purpose, the technical solution of the present document is achieved as that:
the present document provides a network locking method for a mobile terminal, and said mobile terminal has a built-in encryption chip, and customization information is stored in a Subscriber Identity Module (SIM) card, an encryption chip and a mobile terminal main chip respectively;
after said mobile terminal is powered on, said encryption chip compares customization information stored therein with those in said mobile terminal main chip and said SIM card respectively, and after any comparison indicates that the information is inconsistent, communication between said mobile terminal main chip and said SIM card is prevented.

In the above-mentioned solution, said customization information is operator information, or operator information and partner information.

In the above-mentioned solution, said storing the customization information in the SIM card is as follows: when said customization information is the operator information, writing the operator information into a group identification document 1 (GID1) of said SIM card;
when said customization information is the operator information and partner information, writing the operator information into the GID1 file of said SIM card, and writing the partner information into a GID2 file of said SIM card.

In the above-mentioned solution, said encryption chip comparing the customization information with that in said mobile terminal main chip is:
said encryption chip sending a information acquisition signal to said mobile terminal main chip and requesting to acquire the customization information;
after said mobile terminal main chip receives the information acquisition signal, it sending the customization information in its own software security zone to said encryption chip;
said encryption chip comparing the customization information stored therein with the customization information from said mobile terminal main chip, and when the information is inconsistent, preventing the communication between said mobile terminal main chip and said SIM card.

In the above-mentioned solution, said method further comprises: said encryption chip comparing the customization information stored therein with the customization information from said mobile terminal main chip, and when the information is consistent, sending a software verification success signal to said mobile terminal main chip;
after said mobile terminal main chip receives the software verification success signal, sending a information acquisition signal to the encryption chip, and requesting to acquire the customization information in said encryption chip;
after said encryption chip receives the information acquisition signal from the mobile terminal main chip, sending the stored customization information to the mobile terminal main chip;
said mobile terminal main chip comparing the customization information in its own software security zone with the customization information from said encryption chip, and when the information is consistent, said mobile terminal main chip notifying said encryption chip that a hardware verification is successful, and after said encryption chip receives the notification of hardware verification success, executing the step of said encryption chip comparing its customization information with the customization information in said SIM card; when the information is inconsistent, notifying said encryption chip that said hardware verification is failed, and after said encryption chip receives said notification of hardware verification failure, preventing the communication between said mobile terminal main chip and said SIM card.

In the above-mentioned solution, said encryption chip comparing its customization information with the customization information in said SIM card is:
when there is a SIM card inserted in said mobile terminal, said encryption chip sending an information acquisition signal to said SIM card, and requesting to acquire the customization information in said SIM card;
after said SIM card receives said information acquisition signal, it sending the customization information stored therein to said encryption chip;
said encryption chip comparing the customization information stored therein with the customization information from said SIM card, and if the information is inconsistent, preventing the communication between said mobile terminal main chip and said SIM card.

In the above-mentioned scheme, said preventing the communication between said mobile terminal main chip and said SIM card is: said encryption chip of the mobile terminal intercepting the communication information between the mobile terminal main chip and the SIM card, and interrupting the normal communication between the mobile terminal main chip and the SIM card.

The present document provides a mobile terminal, and said mobile terminal comprises: an encryption chip, a mobile terminal main chip, and a SIM card module; wherein
said encryption chip, in which the customization information is stored, is used to, after said mobile terminal is powered on, compare its customization information with those of the mobile terminal main chip and the SIM card module respectively, and if any comparison indicates that the information is inconsistent, prevent communication between said mobile terminal main chip and said SIM card module;
said mobile terminal main chip, in which the customization information is stored, is used to provide its own customization information to said encryption chip for comparison;
said SIM card module, is used to read the customization information in said SIM card, and provide said customization information to said encryption chip.

In the above-mentioned solution, said encryption chip is specifically used to, after any comparison indicates that the information is inconsistent, intercept the communication information between said mobile terminal main chip and said SIM card module, and interrupt the normal communication between said mobile terminal main chip and said SIM card module.

The present document provides a mobile terminal and a network locking method thereof, said mobile terminal has a built-in encryption chip, and customization information is stored in the SIM card, the encryption chip and the mobile terminal main chip respectively; after said mobile terminal is powered on, said encryption chip compares its customization information with those in said mobile terminal main chip and said SIM card respectively, and after any comparison indicates that the information is inconsistent, the communication between said mobile terminal main chip sand said SIM card is prevented. The present document achieves flexible network locking of said mobile terminal, and in the case that the customization information is the operator information or the operator information and the partner information, in any network where the same operator or the same operator and partner can provide services, the mobile terminal can work normally after simply inserting an operator customized SIM card, thus avoiding the problem that said mobile terminal must be returned to the manufacturer to get network re-locked when it is scheduled across networks inside the operator, thus improving efficiency and reducing the cost. Meanwhile, the solution of the present document uses the method of combining software and hardware to compare the information with each other, hence effectively preventing various illegal cracks to the mobile terminal software.

### Brief Description of Drawings

FIG. 1 is a flow chart of a network locking method for a mobile terminal in accordance with the present document;
FIG. 2 is a structural diagram of a mobile terminal implemented in accordance with the present document.

### Preferred Embodiments of the Invention

The basic idea of the present document is: the mobile terminal has a built-in encryption chip, and there is customization information stored in the SIM card, the encryption chip and the mobile terminal main chip respectively; after the mobile terminal is powered on, the encryption chip compares its customization information with those in the mobile terminal main chip and the SIM card respectively, and if any comparison indicates that the information is inconsistent, the communication between the mobile terminal main chip and the SIM card is prevented.

The present document will be illustrated in further detail below in combination with the accompanying drawings and specific embodiments.

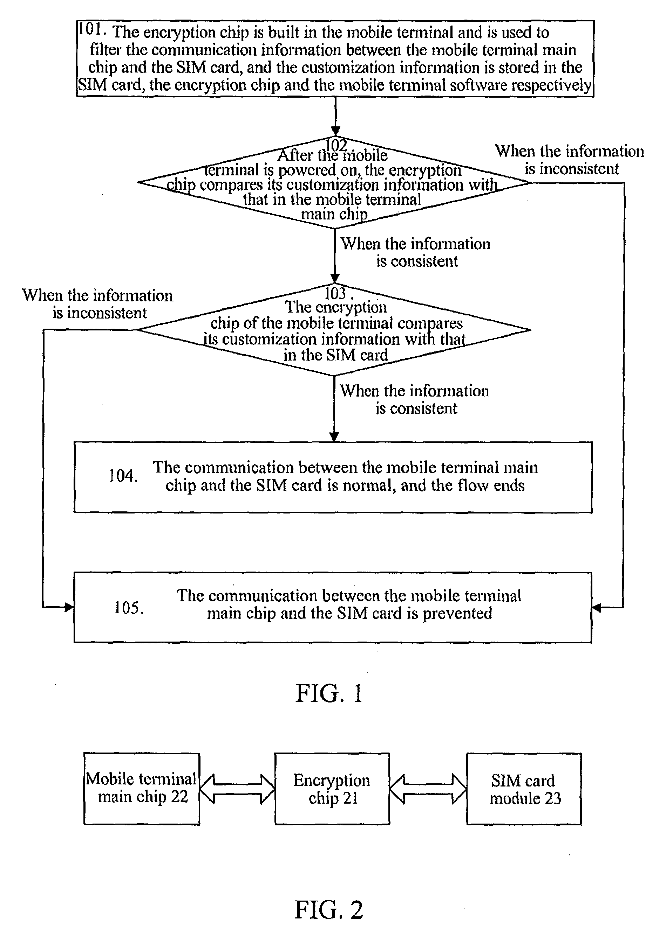

The present document provides a method for locking the operator of the mobile terminal, and as shown in FIG. 1, the method comprises the following steps:
In step 101, the encryption chip is built in the mobile terminal and is used to filter the communication information between the mobile terminal main chip and the SIM card, and the customization information is stored in the SIM card, the encryption chip and the mobile terminal software respectively;
specifically, an encryption chip is added in the mobile terminal, which is serially connected between the mobile terminal main chip and the SIM card, and the encryption chip is used to filter the communication information between the mobile terminal main chip and the SIM card, and the customization information is written into the software security zones of the SIM card, the encryption chip and the mobile terminal main chip respectively in advance;
the customization information might be the operator information or the operator information and the partner information; the operator information generally comprises: operator name, operator code, and so on; the partner information is the information of the manufacture that signs a partnership with the operator, generally comprising: partner name, partner code, and so on;
writing the customization information into the SIM card may be: when the customization information is the operator information, writing the operator information into the GID1 file of the SIM card; when the customization information is the operator information and the partner information, writing the operator information into the GID1 file of the SIM card, and writing the partner information into the GID2 file of the SIM card;
that the encryption chip filters the communication information between the mobile terminal main chip and the SIM card generally comprises: after booting each time, the encryption chip runs automatically, and only acquires the preset information between the mobile terminal main chip and the SIM card, while transparently transmits the remaining information, herein, the preset information is generally an interaction signal related to the customization message; information in the encryption chip can only be written, modified, and erased by the mobile terminal manufacturer.

In Step 102, after the mobile terminal is powered on, the encryption chip compares its customization information with that in the mobile terminal main chip, and when the information is consistent, it is to proceed to step 103; otherwise, it is to proceed to step 105;
specifically, after each reboot of the mobile terminal, the encryption chip sends a information acquisition signal to the mobile terminal main chip, and requests to acquire the customization information; after the mobile terminal main chip receives the information acquisition signal, it sends the customization information in the software security zone to the encryption chip; the encryption chip compares the customization information sent by the mobile terminal main chip with its own stored customization information, and when the information is consistent, it sends a software verification success signal S to the mobile terminal main chip, which indicates that the software verification by the hardware is successful, and it is to proceed to step 103; otherwise, it is to proceed to step 105;
when the customization information is the operator information and the partner information, the encryption chip compares the customization information sent by the mobile terminal main chip with its own stored customization information, specifically: firstly, the encryption chip compares the operator information sent by the mobile terminal main chip with its stored operator information, and if the information is consistent, then it compares the partner information sent by the mobile terminal main chip with its own stored partner information;

Furthermore, after the mobile terminal main chip receives the software verification success signal S, the present step further comprises: the mobile terminal main chip sends a information acquisition signal to the encryption chip and requests to acquire the customization information in the encryption chip; after the encryption chip receives the information acquisition signal from the mobile terminal main chip, it sends its stored customization information to the mobile terminal main chip; the mobile terminal main chip compares the customization information sent by the encryption chip with the customization information in its own software security zone, and when the information is consistent, it notifies the encryption chip that the hardware verification is successful, which indicates that the hardware verification by the software is successful, and after the encryption chip receives the notification of the hardware verification success, it is to proceed to step 103; when the information is inconsistent, it notifies the encryption chip that the hardware verification fails, and after the encryption chip receives the notification of the hardware verification failure, it is to proceed to step 105;
furthermore, in this step, if the mobile terminal software in the mobile terminal main chip is cracked or erased, and if the encryption chip does not receive the customization information returned by the mobile terminal main chip within the specified time period, it is to proceed to step 105.

Through the approach in this step, the hardware and software are combined to compare the customization information with each other, thus effectively preventing all kinds of illegal cracks to the mobile terminal software.

Step 103: The encryption chip of the mobile terminal compares its customization information with that in the SIM card, and when the information is consistent, it is to proceed to step 104; otherwise, it is to proceed to step 105;
specifically, when a SIM card is inserted in the mobile terminal, the encryption chip automatically sends a information acquisition signal to the SIM card and requests to acquire the customization information in the SIM card; after the SIM card receives the information acquisition signal, it sends its own stored customization information to the encryption chip; the encryption chip compares the customization information sent by the SIM card with its own stored customization information, and when the information is consistent, it sends a comparison success signal to the SIM card, and it is to proceed to step 104; otherwise, it is to proceed to step 105;
when the customization information is the operator information and the partner information, the encryption chip compares the customization information sent by the SIM card with its own stored customization information, specifically: firstly, the encryption chip compares the operator information sent by the SIM card with its own stored operator information, and if the information is consistent, compares the partner information sent by the SIM card with its own stored partner information.
Step 104: The communication between the mobile terminal main chip and the SIM card is normal, and the flow ends;
herein, the encryption chip transparently transmits the communication information between the mobile terminal main chip and the SIM card.

Step 105: the communication between the mobile terminal main chip and the SIM card is prevented;
Specifically, the encryption chip serially connected between the mobile terminal main chip and the SIM card intercepts the communication information between the mobile terminal main chip and the SIM card, and interrupts the normal communication between the mobile terminal main chip and the SIM card.

To achieve the above-mentioned method, the present document also provides a mobile terminal, and as shown in FIG. 2, the mobile terminal comprises: an encryption chip 21, a mobile terminal main chip 22, and a SIM card module 23; wherein,
the encryption chip 21, in which the customization information is stored, is used to, after the mobile terminal is powered on, filter the communication information between the mobile terminal main chip 22 and the SIM card module 23; compare the customization information with those in the mobile terminal main chip 22 and the SIM card module 23 respectively, and if any comparison indicates that the information is inconsistent, prevent the communication between the mobile terminal main chip 22 and the SIM card module 23;
the mobile terminal main chip 22, in which the customization information is stored, is used to provide its own customization information to the encryption chip 21 for comparison;
the SIM card module 23, is used to read the customization information in the SIM card, and provide the customization information to the encryption chip 21;
the customization information might be the operator information or the operator information and the partner information;
furthermore, when the customization information is the operator information, the customization information in the SIM card is: writing the operator information into the GID1 of the SIM card; when the customization information is the operator information and the partner information, the customization information in the SIM card is: writing the operator information into the GID1 file of the SIM card, and writing the partner information into the GID2 file of the SIM card.

The encryption chip 21 is specifically used to, after booting each time, send the information acquisition signal to the mobile terminal main chip 22 and request to acquire the customization information, and compare the customization information from the mobile terminal main chip 22 with its own stored customization information after receiving the customization information from the mobile terminal main chip, and when the information is inconsistent, prevent the communication between the mobile terminal main chip 22 and the SIM card module 23; and when the information is consistent, send the software verification success signal S to the mobile terminal main chip 22, and when there is SIM card inserted, automatically send the information acquisition signal to the SIM card module 23 and request to acquire the customization information of the SIM card; and after receiving the customization information sent by the SIM card module 23, compare the customization information from the SIM card module 23 with its own stored customization information, and when the information is inconsistent, prevent the communication between the mobile terminal main chip 22 and the SIM card module 23; when the information is consistent, send a comparison success signal to the SIM card module 23, and transparently transmit the communication information between the mobile terminal main chip 22 and the SIM card module 23, so that the mobile terminal can communicate normally;
furthermore, that the encryption chip 21 prevents the communication between the mobile terminal main chip 22 and the SIM card module 23 particularly is: the encryption chip 21 intercepts the communication information between the mobile terminal main chip 22 and the SIM card module 23, and interrupts the normal communication between the mobile terminal main chip 22 and the SIM card module 23;
the mobile terminal main chip 22 is specifically used to, after receiving the information acquisition signal sent by the encryption chip 21, send the customization information in its own software security zone to the encryption chip 21, and receive the software verification success signal S from the encryption chip 21;
the SIM card module 23 is specifically used to, after receiving the information acquisition signal sent by the encryption chip 21, read the customization information stored in the SIM card and send it to the encryption chip 21, and receive the comparison success signal from the encryption chip 21;
the mobile terminal main chip 22 is further used to, after receiving the software verification success signal S, send the information acquisition signal to the encryption chip 21, and request to acquire the customization information in the encryption chip 21; after receiving the customization information sent by the encryption chip 21, compare the customization information from the encryption chip 21 with the customization information in the security zone of its own mobile terminal software, and when the information is consistent, notify the encryption chip 21 that the hardware verification is successful; and when the information is inconsistent, notify the encryption chip 21 that the hardware verification fails;
the encryption chip 21 is further used to, after receiving the information acquisition signal from the mobile terminal main chip 22, send the stored customization information to the mobile terminal main chip 22, and after receiving the notification of hardware verification success sent by the mobile terminal main chip 22, compare the customization information with that in the SIM card module 23; after receiving the notification of hardware verification failure sent by the mobile terminal main chip 22, not compare the customization information with that in the SIM card module 23, and prevent the communication between the mobile terminal main chip 22 and the SIM card module 23.

With the above solution, flexible network locking of the mobile terminal can be achieved, and in the case that the customization information is the operator information or the operator information and the partner information, in any network where the same operator or the same operator and partner can provide services, the mobile terminal can work normally by simply inserting the operator's customized SIM card, thus avoiding the problem that the mobile terminal must be returned and get network re-locked at the manufacturer when it is scheduled across networks inside the operator, and improving efficiency and reducing the cost. Meanwhile, the way of combining software and hardware is used to compare the information with each other; hence effectively preventing various illegal cracks to the mobile terminal software.

The above description is only the preferred embodiments of the present document and is not intended to limit the protection scope of the present document.

## Claims

1. A network locking method for a mobile terminal, wherein, said mobile terminal has a built-in encryption chip, comprising:
storing customization information in a subscriber identity module, SIM, card, said encryption chip and a mobile terminal main chip respectively (101);
after said mobile terminal is powered on, said encryption chip comparing customization information stored therein with those in said mobile terminal main chip and said SIM card respectively (102-103), and after any comparison indicates that the information is inconsistent, preventing communication between said mobile terminal main chip and said SIM card (105);
said encryption chip comparing customization information stored therein with that in said mobile terminal main chip comprises:
a) said encryption chip sending a information acquisition signal to said mobile terminal main chip and requesting to acquire the customization information;
b) after receiving the information acquisition signal, said mobile terminal main chip sending the customization information in a software security zone of itself to the encryption chip;
c) said encryption chip comparing the customization information stored therein with the customization information from said mobile terminal main chip, and when the information is inconsistent, preventing the communication between said mobile terminal main chip and said SIM card;
**characterized in that** said method further comprises:
d) said encryption chip comparing the customization information stored therein with the customization information from said mobile terminal main chip, and when the information is consistent, sending a software verification success signal to said mobile terminal main chip;
e) after receiving the software verification success signal, said mobile terminal main chip sending a information acquisition signal to said encryption chip, and requesting to acquire the customization information in said encryption chip;
f) after receiving the information acquisition signal from said mobile terminal main chip, said encryption chip sending the stored customization information to said mobile terminal main chip;
g) said mobile terminal main chip comparing the customization information in a software security zone of itself with the customization information from said encryption chip, and when the information is consistent, said mobile terminal main chip notifying said encryption chip that a hardware verification is successful, and
h) after receiving the notification of the hardware verification success, said encryption chip executing the step of said encryption chip comparing customization information stored therein with that in said SIAM card;
i) when the information compared in step g) is inconsistent, said mobile terminal main chip notifying said encryption chip that the hardware verification is failed, and
j) after said encryption chip receives the notification of the hardware verification failure, preventing the communication between said mobile terminal main chip and said SIM card.

2. The method of claim 1, wherein, said customization information is operator information, or operator information and partner information.

3. The method of claim 2, wherein, said storing customization information in the SIM card is: when said customization information is the operator information, writing the operator information into a group identification document 1 of said SIM card;
when said customization information is the operator information and the partner information, writing the operator information into the group identification document 1 of said SIM card, and writing the partner information into a group identification document 2 of said SIM card.

4. The method of any one of claims 1-3, wherein, said encryption chip comparing customization information stored therein with that in said SIM card is:
when there is a SIM card inserted in said mobile terminal, said encryption chip sending an information acquisition signal to said SIM card, and requesting to acquire the customization information in said SIM card;
after receiving said information acquisition signal, said SIM card sending the customization information stored therein to said encryption chip;
said encryption chip comparing the customization information stored therein with the customization information from said SIM card, and when the information is inconsistent, preventing the communication between said mobile terminal main chip and said SIM card.

5. The method of claim 4, wherein, said preventing the communication between said mobile terminal main chip and said SIM card is: the encryption chip of the mobile terminal intercepting communication information between said mobile terminal main chip and said SIM card, and interrupting normal communication between said mobile terminal main chip and said SIM card.

6. A mobile terminal, comprising: an encryption chip (21), a mobile terminal main chip (22), and a SIM card module (23); wherein
said encryption chip (21), in which customization information is stored, is adapted to, after said mobile terminal is powered on, compare the customization information stored in the encryption chip (21) with customization information of the mobile terminal main chip (22) and the SIM card module (23) respectively, and after any comparison indicates that the information is inconsistent, prevent communication between said mobile terminal main chip (22) and said SIM card module (23);
said mobile terminal main chip (22), in which customization information is stored, is adapted to provide the customization information of the mobile terminal main chip itself to said encryption chip (21) for comparison;
said SIM card module (23) is adapted to read customization information in said SIM card, and provide that customization information to said encryption chip (21);
said encryption chip (21) being configured to:
send a information acquisition signal to said mobile terminal main chip (22) and request to acquire the customization information;
compare the customization information stored therein with the customization information from said mobile terminal main chip (22), when the information is inconsistent, prevent the communication between said mobile terminal main chip (22) and said SIM card, and when the information is consistent, send a software verification success signal to said mobile terminal main chip (22);
send the stored customization information to said mobile terminal main chip (22) after receiving an information acquisition signal from said mobile terminal main chip (22);
compare customization information stored therein with that in said SIM card after receiving a notification of hardware verification success from said mobile terminal main chip (22); and
prevent the communication between said mobile terminal main chip (22) and said SIM card after receiving a notification of hardware verification failure from said mobile terminal main chip (22);
said mobile terminal main chip (22) is configured to:
send the customization information in a software security zone of itself to said encryption chip (21) after receiving the information acquisition signal from said encryption chip (21);
after receiving the software verification success signal, send a information acquisition signal to said encryption chip (21), and request to acquire the customization information in said encryption chip (21);
compare the customization information in a software security zone of itself with the customization information from said encryption chip (21), when the information is consistent, notify said encryption chip (21) that a hardware verification is successful, and when the information is inconsistent, notifying said encryption chip (21) that the hardware verification is failed.

7. The mobile terminal of claim 6, wherein, said customization information is operator information or operator information and partner information.

8. The mobile terminal of claim 7, wherein, said encryption chip (21) is specifically adapted to, after any comparison indicates that the information is inconsistent, intercept communication information between said mobile terminal main chip (22) and said SIM card module (23), and interrupt normal communication between said mobile terminal main chip (22) and said SIM card module (23).

## Patentansprüche

1. Ein Netzwerkblockierverfahren für ein mobiles Endgerät, wobei das mobile Endgerät einen eingebauten Verschlüsselungs-Chip hat, Folgendes umfassend:
Speichern kundenspezifischer Informationen in einem Teilnehmeridentifikationsmodul (SIM-Karte), dem Verschlüsselungs-Chip beziehungsweise einem Haupt-Chip für das mobile Endgerät (101);
nachdem das mobile Endgerät eingeschaltet wurde, Vergleichen, durch den Verschlüsselungs-Chip, der darin gespeicherten Informationen mit denjenigen in dem Haupt-Chip für das mobile Endgerät beziehungsweise der SIM-Karte (102, 103), und, nachdem ein Vergleich ergeben hat, dass die Informationen inkonsistent sind, Verhindern der Kommunikation zwischen dem Haupt-Chip für das mobile Endgerät und der SIM-Karte (105);
wobei ein Vergleichen durch den Verschlüsselungs-Chip von kundenspezifischer Informationen, die darin gespeichert sind, mit denjenigen in dem Haupt-Chip für das mobile Endgerät Folgendes umfasst:
a) Senden durch den Verschlüsselungs-Chip eines Informationserfassungssignals an den Haupt-Chip für das mobile Endgerät und das Anfordern der Erfassung der kundenspezifischen Informationen;
b) nach Empfangen des Informationserfassungssignals, Senden der kundenspezifischen Informationen, durch den Haupt-Chip für das mobile Endgerät, in einer Software-Schutz-Zone von sich selbst an den Verschlüsselungs-Chip;
c) Vergleichen, durch den Verschlüsselungs-Chip, der darin gespeicherten kundenspezifischen Informationen mit den kundenspezifischen Informationen von dem Haupt-Chip für das mobile Endgerät, und, wenn die Informationen inkonsistent sind, Verhindern der Kommunikation zwischen dem Haupt-Chip für das mobile Endgerät und der SIM-Karte;
**dadurch gekennzeichnet, dass** das Verfahren weiter Folgendes umfasst:
d) Vergleichen, durch den Verschlüsselungs-Chip, der darin gespeicherten kundenspezifischen Informationen mit den kundenspezifischen Informationen von dem Haupt-Chip für das mobile Endgerät und, wenn die Informationen konsistent sind, Senden eines Softwareüberprüfungs-Erfolgssignals an den Haupt-Chip für das mobile Endgerät;
e) nach dem Empfangen des Softwareüberprüfungs-Erfolgssignals, Senden eines Informationserfassungssignals an den Verschlüsselungs-Chip und Auffordern zur Erfassung der kundenspezifischen Informationen in dem Verschlüsselungs-Chip durch den Haupt-Chip für das mobile Endgerät;
f) nach Empfangen des Informationserfassungssignals von dem Haupt-Chip für das mobile Endgerät, Senden der gespeicherten kundenspezifischen Informationen an den Haupt-Chip für das mobile Endgerät durch den Verschlüsselungs-Chip;
g) Vergleichen, durch den Haupt-Chip für das mobile Endgerät, der kundenspezifischen Informationen in einer Software-Schutz-Zone von sich selbst mit den kundenspezifischen Informationen von dem Verschlüsselungs-Chip; und, wenn die Informationen konsistent sind, Benachrichtigen des Verschlüsselungs-Chips durch den Haupt-Chip für das mobile Endgerät darüber, dass eine Hardwareüberprüfung erfolgreich ist; und
h) nach Empfangen der Benachrichtigung über den Hardwareüberprüfungserfolg, Durchführen des Schritts des Vergleichens, durch den Verschlüsselungs-Chip, darin gespeicherter kundenspezifischer Informationen mit denjenigen in der SIM-Karte durch den Verschlüsselungs-Chip;
i) wenn die in Schritt g) verglichenen Informationen inkonsistent sind, Benachrichtigen des Verschlüsselungs-Chips durch den Haupt-Chip des mobilen Endgeräts darüber, dass die Hardwareüberprüfung gescheitert ist; und
j) nachdem der Verschlüsselungs-Chip die Benachrichtigung über den Hardwareüberprüfungsfehler empfangen hat, Verhindern der Kommunikation zwischen dem Haupt-Chip für das mobile Endgerät und der SIM-Karte.

2. Das Verfahren gemäß Anspruch 1, wobei die kundenspezifischen Informationen Bedienerinformationen oder Bedienerinformationen und Partnerinformationen sind.

3. Das Verfahren gemäß Anspruch 2, wobei das Speichern kundenspezifischer Informationen in der SIM-Karte Folgendes ist: wenn die kundenspezifischen Informationen die Bedienerinformationen sind, Schreiben der Bedienerinformationen in ein Gruppenidentifikationsdokument 1 der SIM-Karte;
wenn die kundenspezifischen Informationen die Bedienerinformationen und die Partnerinformationen sind, Schreiben der Bedienerinformationen in das Gruppenidentifikationsdokument 1 der SIM-Karte und Schreiben der Partnerinformationen in ein Gruppenidentifikationsdokument 2 der SIM-Karte.

4. Das Verfahren gemäß einem beliebigen der Ansprüche 1-3, wobei der Vergleich, durch den Verschlüsselungs-Chip, kundenspezifischer Informationen, die darin gespeichert sind, mit denjenigen in der SIM-Karte Folgendes ist:
wenn eine SIM-Karte in das mobile Endgerät eingesetzt ist, Senden eines Informationserfassungssignals an die SIM-Karte und Auffordern zur Erfassung der kundenspezifischen Informationen in der SIM-Karte durch den Verschlüsselungs-Chip;
nach Empfangen des Informationserfassungssignals, Senden der darin gespeicherten kundenspezifischen Informationen an den Verschlüsselungs-Chip durch die SIM-Karte;
Vergleichen, durch den Verschlüsselungs-Chip, der darin gespeicherten kundenspezifischen Informationen mit den kundenspezifischen Informationen von der SIM-Karte, und, wenn die Informationen inkonsistent sind, Verhindern der Kommunikation zwischen dem Haupt-Chip des mobilen Endgeräts und der SIM-Karte.

5. Das Verfahren gemäß Anspruch 4, wobei das Verhindern der Kommunikation zwischen dem Haupt-Chip für das mobile Endgerät und der SIM-Karte Folgendes ist: Ein Abfangen von Kommunikationsinformationen zwischen dem Haupt-Chip für das mobile Endgerät und der SIM-Karte und ein Unterbrechen normaler Kommunikation zwischen dem Haupt-Chip des mobilen Endgeräts und der SIM-Karte durch den Verschlüsselungs-Chip des mobilen Endgeräts.

6. Ein mobiles Endgerät, das einen Verschlüsselungs-Chip (21), einen Haupt-Chip (22) für das mobile Endgerät und ein SIM-Kartenmodul (23) umfasst; wobei
der Verschlüsselungs-Chip (21), in dem kundenspezifische Informationen gespeichert sind, ausgebildet ist, um, nachdem das mobile Endgerät eingeschaltet wurde, die im Verschlüsselungs-Chip (21) gespeicherten kundenspezifischen Informationen mit kundenspezifischen Informationen des Haupt-Chips (22) des mobilen Endgeräts beziehungsweise dem SIM-Kartenmodul (23) zu vergleichen und, nachdem ein Vergleich ergeben hat, dass die Informationen inkonsistent sind, eine Kommunikation zwischen dem Haupt-Chip (22) des mobilen Endgeräts und dem SIM-Kartenmodul (23) zu verhindern;
der Haupt-Chip (22) des mobilen Endgeräts, in dem kundenspezifische Informationen gespeichert sind, ausgebildet ist, um die kundenspezifischen Informationen des Haupt-Chips des mobilen Endgeräts selbst dem Verschlüsselungs-Chip (21) für Vergleichszwecke zur Verfügung zu stellen;
das SIM-Kartenmodul (23) ausgebildet ist, um kundenspezifische Informationen in der SIM-Karte zu lesen und die kundenspezifischen Informationen dem Verschlüsselungs-Chip (21) zur Verfügung zu stellen;
wobei der Verschlüsselungs-Chip (21) konfiguriert ist, um:
ein Informationserfassungssignal an den Haupt-Chip (22) des mobilen Endgeräts zu senden und die Erfassung der kundenspezifischen Informationen anzufordern;
die darin gespeicherten kundenspezifischen Informationen mit den kundenspezifischen Informationen von dem Haupt-Chip (22) des mobilen Endgeräts zu vergleichen; und wenn die Informationen inkonsistent sind, die Kommunikation zwischen dem Haupt-Chip (22) des mobilen Endgeräts und der SIM-Karte zu verhindern, und wenn die Informationen konsistent sind, ein Softwareüberprüfungs-Erfolgssignal an den Haupt-Chip (22) des mobilen Endgeräts zu senden;
die gespeicherten kundenspezifischen Informationen nach Empfang eines Informationserfassungssignals von dem Haupt-Chip (22) des mobilen Endgeräts an den Haupt-Chip (22) des mobilen Endgeräts zu senden;
darin gespeicherte kundenspezifische Informationen nach Empfang einer Benachrichtigung über den Hardwareüberprüfungserfolg von dem Haupt-Chip (22) des mobilen Endgeräts mit denjenigen in der SIM-Karte zu vergleichen; und
die Kommunikation zwischen dem Haupt-Chip (22) des mobilen Endgeräts und der SIM-Karte nach Empfang einer Benachrichtigung über einen Hardwareüberprüfungsfehler von dem Haupt-Chip (22) des mobilen Endgeräts zu verhindern;
wobei der Haupt-Chip (22) des mobilen Endgeräts konfiguriert ist, um:
die kundenspezifischen Informationen in einer Software-Schutz-Zone von sich selbst nach Empfang des Informationserfassungssignals von dem Verschlüsselungs-Chip (21) an den Verschlüsselungs-Chip (21) zu senden;
nach Empfang des Softwareüberprüfungs-Erfolgssignals, ein Informationserfassungssignal an den Verschlüsselungs-Chip (21) zu senden und die Erfassung der kundenspezifischen Informationen in dem Verschlüsselungs-Chip (21) anzufordern;
die kundenspezifischen Informationen in einer Software-Schutz-Zone von sich selbst mit den kundenspezifischen Informationen von dem Verschlüsselungs-Chip (21) zu vergleichen; und wenn die Informationen konsistent sind, den Verschlüsselungs-Chip (21) zu benachrichtigen, dass eine Hardwareüberprüfung erfolgreich ist, und wenn die Informationen inkonsistent sind, den Verschlüsselungs-Chip (21) zu benachrichtigen, dass die Hardwareüberprüfung gescheitert ist.

7. Das mobile Endgerät gemäß Anspruch 6, wobei die kundenspezifischen Informationen Bedienerinformationen oder Bedienerinformationen und Partnerinformationen sind.

8. Das mobile Endgerät gemäß Anspruch 7, wobei der Verschlüsselungs-Chip (21) spezifisch ausgebildet ist, um, nachdem ein Vergleich ergeben hat, dass die Informationen inkonsistent sind, Kommunikationsinformationen zwischen dem Haupt-Chip (22) des mobilen Endgeräts und dem SIM-Kartenmodul (23) abzufangen und die normale Kommunikation zwischen dem Haupt-Chip (22) des mobilen Endgeräts und dem SIM-Kartenmodul (23) zu unterbrechen.

## Revendications

1. Procédé de verrouillage de réseau pour un terminal mobile, dans lequel, ledit terminal mobile comporte une puce d'encryptage interne, comprenant :
de stocker une information de personnalisation dans un module d'identité de souscripteur, une carte SIM, ladite puce d'encryptage et une puce principale de terminal mobile, respectivement (101) ;
après que ledit terminal mobile est allumé, ladite puce d'encryptage comparant l'information de personnalisation stockée en elle avec celle dans ladite puce principale de terminal mobile et ladite carte SIM respectivement (102-103), et après qu'une comparaison quelconque a indiqué que l'information n'est pas correcte, empêcher la communication entre ladite puce principale de terminal mobile et ladite carte SIM (105) ;
ladite puce d'encryptage comparant l'information de personnalisation stockée en elle avec celle dans ladite puce principale de terminal mobile comprend :
a) ladite puce d'encryptage envoyant un signal d'acquisition d'information à ladite puce principale de terminal mobile et requérant d'acquérir l'information de personnalisation ;
b) après réception du signal d'acquisition d'information, ladite puce principale de terminal mobile envoyant l'information de personnalisation dans une zone de sécurité de logiciel d'elle-même vers la puce d'encryptage ;
c) ladite puce d'encryptage comparant l'information de personnalisation stockée en elle avec l'information de personnalisation venant de la puce principale de terminal mobile, et quand l'information est incorrecte, empêchant la communication entre ladite puce principale de terminal mobile et ladite carte SIM ;
**caractérisé en ce que** ledit procédé comprend en outre :
d) ladite puce d'encryptage comparant l'information de personnalisation stockée en elle avec l'information de personnalisation venant de ladite puce principale de terminal mobile, et quand l'information est correcte, envoyant un signal de succès de vérification logicielle à ladite puce principale de terminal mobile ;
e) après réception du signal de succès de vérification logicielle, ladite puce principale de terminal mobile envoyant un signal d'acquisition d'information à ladite puce d'encryptage, et requérant d'acquérir l'information de personnalisation dans ladite puce d'encryptage ;
f) après réception du signal d'acquisition d'information venant de ladite puce principale de terminal mobile, ladite puce d'encryptage envoyant l'information de personnalisation stockée vers ladite puce principale de terminal mobile ;
g) ladite puce principale de terminal mobile comparant l'information de personnalisation dans une zone de sécurité de logiciel d'elle-même avec l'information de personnalisation venant de ladite puce d'encryptage, et quand l'information est correcte, ladite puce principale de terminal mobile notifiant à ladite puce d'encryptage qu'une vérification matérielle est réussie, et
h) après réception de la notification du succès de la vérification matérielle, ladite puce d'encryptage exécutant l'étape de ladite puce d'encryptage comparant l'information de personnalisation stockée en elle avec celle dans ladite carte SIM ;
i) quand l'information comparée lors de l'étape g) est incorrecte, ladite puce principale de terminal mobile notifiant à ladite puce d'encryptage que la vérification matérielle a échoué, et
j) après que ladite puce d'encryptage a reçu la notification de l'échec de al vérification matérielle, empêcher la communication entre ladite puce principale de terminal mobile et ladite carte SIM.

2. Procédé selon la revendication 1, dans lequel, ladite information de personnalisation est une information d'opérateur, ou une information d'opérateur et une information de partenaire.

3. Procédé selon la revendication 2, dans lequel, stocker ladite information de personnalisation dans la carte SIM consiste à :
quand ladite information de personnalisation est l'information d'opérateur, écrire l'information d'opérateur dans un document d'identification de groupe 1 de ladite carte SIM ;
quand ladite information de personnalisation est l'information d'opérateur et l'information de partenaire, écrire l'information d'opérateur dans le document d'identification de groupe 1 de ladite carte SIM, et écrire l'information de partenaire dans un document d'identification de groupe 2 de ladite carte SIM.

4. Procédé selon l'une quelconque des revendications 1-3, dans lequel, ladite puce d'encryptage comparant l'information de personnalisation stockée en elle avec celle dans ladite carte SIM consiste à :
quand il y a une carte SIM insérée dans ledit terminal mobile, ladite puce d'encryptage envoyant un signal d'acquisition d'information à ladite carte SIM, et requérant d'acquérir l'information de personnalisation dans ladite carte SIM ;
après réception dudit signal d'acquisition d'information, ladite carte SIM envoyant l'information de personnalisation stockée en elle à ladite puce d'encryptage ;
ladite puce d'encryptage comparant l'information de personnalisation stockée en elle avec l'information de personnalisation venant de ladite carte SIM, et quand l'information est incorrecte, empêchant la communication entre ladite puce principale de terminal mobile et ladite carte SIM.

5. Procédé selon la revendication 4, dans lequel, ledit empêchement de la communication entre ladite puce principale de terminal mobile et ladite carte SIM consiste à : la puce d'encryptage du terminal mobile interceptant l'information de communication entre ladite puce principale de terminal mobile et ladite carte SIM, et interrompant une communication normale entre ladite puce principale de terminal mobile et ladite carte SIM.

6. Terminal mobile, comprenant : une puce d'encryptage (21), une puce principale de terminal mobile (22), et un module de carte SIM (23) ; dans lequel
ladite puce d'encryptage (21), dans laquelle l'information de personnalisation est stockée, est adaptée pour, après que ledit terminal mobile est allumé, comparer l'information de personnalisation stockée dans la puce d'encryptage (21) avec l'information de personnalisation de la puce principale de terminal mobile (22) et du module de carte SIM (23) respectivement, et après qu'une comparaison quelconque indique que l'information est incorrecte, empêcher la communication entre ladite puce principale de terminal mobile (22) et ledit module de carte SIM (23) ;
ladite puce principale de terminal mobile (22), dans laquelle l'information de personnalisation est stockée, est adaptée pour fournir l'information de personnalisation stockée en elle à ladite puce d'encryptage (21) pour comparaison ;
ledit module de carte SIM (23) est adapté pour lire une information de personnalisation dans ladite carte SIM, et fournir cette information de personnalisation à ladite puce d'encryptage (21) ;
ladite puce d'encryptage (21) étant configurée pour :
envoyer un signal d'acquisition d'information à ladite puce principale de terminal mobile (22) et requérir l'acquisition de l'information de personnalisation ;
comparer l'information de personnalisation stockée en elle avec l'information de personnalisation venant de ladite puce principale de terminal mobile (22), quand l'information est incorrecte, empêcher la communication entre ladite puce principale de terminal mobile (22) et ladite carte SIM, et quand information est correcte, envoyer un signal de succès de vérification logicielle à ladite puce principale de terminal mobile (22) ;
envoyer l'information de personnalisation stockée à ladite puce principale de terminal mobile (22) après réception du signal d'acquisition d'information depuis la puce principale de terminal mobile (22) ;
comparer l'information de personnalisation stockée en elle avec celle dans ladite carte SIM après réception d'une notification de succès de vérification matérielle venant de ladite puce principale de terminal mobile (22) ; et
empêcher la communication entre ladite puce principale de terminal mobile (22) et ladite carte SIM après réception d'une notification d'échec de vérification matérielle venant de ladite puce principale de terminal mobile (22) ;
ladite puce principale de terminal mobile (22) est configurée pour :
envoyer l'information de personnalisation dans une zone de sécurité de logiciel d'elle-même vers ladite puce d'encryptage (21) après réception du signal d'acquisition d'information venant de ladite puce d'encryptage (21) ;
après réception du signal de succès de vérification logicielle, envoyer un signal d'acquisition d'information à ladite puce d'encryptage (21), et requérir d'acquérir l'information de personnalisation dans ladite puce d'encryptage (21) ;
comparer l'information de personnalisation dans une zone de sécurité de logiciel d'elle-même avec l'information de personnalisation venant de ladite puce d'encryptage (21), quand l'information est cohérente, notifier à ladite puce d'encryptage (21) qu'une vérification matérielle est réussie, et quand l'information est incorrecte, notifier à ladite puce d'encryptage (21) que la vérification matérielle est un échec.

7. Terminal mobile selon la revendication 6, dans lequel, ladite information de personnalisation est une information d'opérateur ou une information d'opérateur et une information de partenaire.

8. Terminal mobile selon la revendication 7, dans lequel, ladite puce d'encryptage (21) est spécialement adaptée pour, après qu'une comparaison quelconque a indiqué que l'information est incorrecte, intercepter l'information de personnalisation entre ladite puce principale de terminal mobile (22) et ledit module de carte SIM (23), et interrompre une communication normale entre ladite puce principale de terminal mobile (22) et ledit module de carte SIM (23).
